# EUROPÄISCHE PATENTSCHRIFT

(11) **EP 4 011 600 B1**
(45) Veröffentlichungstag und Bekanntmachung des Hinweises auf die Patenterteilung: **20.09.2023**
(21) Anmeldenummer: 21207917.2
(22) Anmeldetag: 12.11.2021
(51) Int. Cl.: B29C 64/153, B33Y 70/00, B33Y 70/10, B33Y 10/00

(54) **VERFAHREN ZUR HERSTELLUNG EINES BAUTEILS IM WEGE DER ADDITIVEN FERTIGUNG**
METHOD FOR PRODUCING A COMPONENT BY WAY OF ADDITIVE MANUFACTURING
PROCÉDÉ DE FABRICATION D'UN COMPOSANT PAR FABRICATION ADDITIVE

(30) Priorität: 10.12.2020 DE 102020132985
(43) Veröffentlichungstag der Anmeldung: 15.06.2022
(73) Patentinhaber: REHAU Industries SE & Co. KG, 95111 Rehau (DE)
(72) Erfinder: Eibl, Stefan, 95028 Hof (DE); Häupler, Bernhard, 95032 Hof (DE); Matthes, Philipp, 95030 Hof (DE)

(56) Entgegenhaltungen:
- EP-A1- 3 715 401
- EP-B1- 1 982 816
- WO-A1-96/30195
- WO-A1-2019/221733
- CN-A- 108 727 814

## Beschreibung

Die Erfindung betrifft ein Verfahren zur Herstellung eines Bauteils im Wege der additiven Fertigung, insbesondere durch selektives Lasersintern (SLS), wobei als Grundmaterial ein pulverförmiger Werkstoff eingesetzt wird.

Das Lasersintern gehört zur Gruppe der generativen Schichtbauverfahren. Hierbei wird das Werkstück sukzessive Schicht für Schicht aufgebaut, wobei die Bauplattform nach und nach nach unten verfahren wird. Durch die Wirkung der Laserstrahlen ist es möglich, praktisch beliebige dreidimensionale Geometrien zu erzeugen, wobei insbesondere auch Hinterschneidungen kein fertiungstechnisches Problem darstellen. Dadurch lassen sich Werkstücke erzeugen, die mittels konventioneller mechanischer oder gießtechnischer Verfahren nicht herstellbar sind.

WO 96/30195 A1 offenbart ein Verfahren gemäß dem Oberbegriff des Anspruchs 1.

Um die Dichte entsprechender Bauteile zu reduzieren und diese damit in Bereichen einsetzen zu können, in denen das Bauteilgewicht eine große Bedeutung hat, z.B. in der Luftfahrt, wird in der EP 1 982 816 B1 vorgeschlagen, dem Werkstoff poröse Blähglaspartikel mit feinen Porenstrukturen zuzusetzen. Der Gewichtseinspareffekt ist hierbei jedoch begrenzt und aufgrund der unregelmäßigen Strukturen der Blähglaspartikel besteht das Problem relativ stark schwankender Festigkeitseigenschaften des damit hergestellten Bauteils.

Vor diesem Hintergrund liegt der Erfindung die Aufgabe zugrunde, ein Verfahren mit den eingangs beschriebenen Merkmalen anzugeben, welches sich durch eine geringe Dichte bei gleichzeitig definierten Materialeigenschaften des damit hergetellten Bauteils auszeichnet.

Erfindungsgemäß wird diese Aufgabe dadurch gelöst, dass dem pulverförmigen Werkstoff vor der Bauteilherstellung Micro-Hohlkugeln mit einer geschlossenen Oberfläche zugesetzt werden. Die Micro-Hohlkugeln bestehen zweckmäßigerweise aus einem amorphen Material, insbesondere Glas. Alternativ können die Micro-Hohlkugeln jedoch auch aus z.B. Keramik oder einem Kunststoff bestehen. Micro-Hohlkugeln sind kommerziell verfügbar, sind sehr gleichförmig ausgebildet und werden vorzugsweise aus einem alkaliarmen Borosilikatglas gefertigt. Sie zeichnen sich durch eine chemische Inaktivität aus und verbinden niedrige Dichte mit einer hohen Druckfestigkeit. Die Micro-Hohlkugeln können in den pulverförmigen Werkstoff eingemischt sein oder mit diesem compoundiert werden.

Erfindungsgemäss weisen die Micro-Hohlkugeln einen mittleren Durchmesser von 15 bis 25 µm, auf. Die Wandstärke der Micro-Hohlkugeln beträgt 1 bis 3 µm.

Im Rahmen der Erfindung liegt es insbesondere, dass im hergestellten Bauteil das Gewichtsverhältnis von Micro-Hohlkugeln zu pulverförmigem Werkstoff 0,5 bis 25 %, z.B. 1 bis 10 %, vorzugsweise 1,5 bis 5 %, beträgt.

Vorzugsweise weisen die Micro-Hohlkugeln eine, vorzugsweise siliziumhaltige, Oberflächenbeschichtung aufweisen. Hierdurch kann insbesondere die Anbindung der Oberfläche der Micro-Hohlkugeln an den Grundwerkstoff des Bauteils verbessert werden. Hierzu kann die Oberfläche der Mikro-Glashohlkugeln funktionelle Gruppen, ausgewählt aus Hydroxy- und / oder Amino- und / oder Imino- und / oder Imido- und / oder Amido- und / oder Carboxyl- und / oder Urethdion und / oder Ester und / oder Sulfonyl- und / oder Anhydrid- und / oder Aceto- und / oder Acryl- und / oder Phosphonyl- und / oder Epoxy- und / oder Silylgruppe aufweisen.

Zweckmäßigerweise wird ein pulverförmiger Werkstoff aus Kunststoff, insbesondere enthaltend ein Polyamid und/oder ein Polyolefin und/oder ein Polyester und/oder ein thermoplastisches Polyurethan und/oder ein Styrolcopolymer und/oder ein Polyetherimid und/oder ein Polyetheramid und/oder ein Polyetherketon und/oder ein Polyetheretherketon verwendet. Im Rahmen der Erfindung liegt es, dass der Kunststoff enhält:
- ein linearkettiges und/oder verzweigtkettiges und/oder hyperverzweigtes und/oder dendritisches amorphes und/oder mikrokristallines und/oder teilkristallines und/oder flüssigkristallines aromatisches und/oder teilaromatisches und/oder aliphatisches und/oder teilaliphatisches und/oder cycloaliphatisches Oligomer oder Polymer oder Homopolymer oder Copolymer oder Block-Copolymer oder Random-Copolymer, und / oder
- ein chemisch modifiziertes Inearkettiges und/oder verzweigtkettiges und/oder hyperverzweigtes und/oder dendritisches amorphes und/oder mikrokristallines und/oder teilkristallines und/oder flüssigkristallines aromatisches und/oder teilaromatisches und/oder aliphatisches und/oder teilaliphatisches und/oder cycloaliphatisches Oligomer oder Polymer oder Copolymer oder Block-Copolymer oder Random-Copolymer, und / oder
- einen Blend aus
   einem linearkettigen und/oder verzweigtkettigen und/oder hyperverzweigten und/oder dendritischen amorphen und/oder mikrokristallinen und/oder teilkristallinen und/oder flüssigkristallinen aromatischen und/oder teilaromatischen und/oder aliphatischen und/oder teilaliphatischen und/oder cycloaliphatischen Oligomeren oder Polymeren oder Copolymeren oder Block-Copolymeren oder Random-Copolymeren, das in seiner Ausgangsform vorliegt und/oder durch eine Pfropfungsreaktion und/oder durch eine Additionsreaktion und/oder durch eine Kondensationsreaktion mit mindestens einer funktionellen Gruppe modifiziert ist, und das optional eine Mischung und/oder ein Blend mehrerer Polymere ist.

Als Material für den Kunststoff können ferner insbesondere zum Einsatz kommen: Copolyamide, Polyamidharze, Polyetheramide, Polyesteramide, Polyamid-Schmelzklebstoffe, die durch Kondensations- und/oder Ringöffnungspolymerisation aus Aminen und/oder Carbonsäuren und/oder Lactamen erhalten werden, wobei diese polymere Fettsäuren und/oder monomere Fettsäuren und/oder dimere Fettsäuren und/oder trimere Fettsäuren und/oder Dicarbonsäuren und/oder Dimerdiamine und/oder Polyetherdiamine und/oder langkettige Aminocarbonsäuren und/oder Lactame und/oder primäre lineare Alkylendiamine und/oder lineare Alkylendiamine und/oder verzweigtkettige Alkylendiamine und/oder heterocyclische sekundäre Diamine und/oder cycloaliphatische Diamine und/oder Polyetherpolyole enthalten. Die Amine können lineare, verzweigte, nicht-cyclische und cycloaliphatische C4-C18-Kohlenwasserstoffverbindungen mit zwei primären Aminogruppen, wie beispielsweise 2-Methyl-1,5-diaminopentan, Hexamethylendiamin, 1,8-Diaminooctan, 2-Methyl-1,8-Oktandiamin, 1,9-Diaminononan, 1,10-Diaminodecan 1,11-Diaminoundecan, 1, 12-Diaminododecan, Diaminocyclohexan, Bis(4-amino-3-methyl-cyclohexyl)methan, Bis(4-aminocyclohexyl)methan, Bis(4-amino-3,5-dimethylcyclohexyl)methan, 2,2,4-Trimethylhexamethylendiamin, 2,4,4-Trimethylhexamethylendiamin, Isophorondiamin, 3-Aminomethyl-3,5,5-trimethylcyclohexylamin, Bis-(3-methyl-4-aminocyclohexyl)methan, 4,4'-Bis(aminocyclohexyl)methan, 3,3'-Dimethyl-4,4'-bis(aminocyclohexyl)-methan, und araliphatische und / oder aromatische C6-C18-Kohlenwasserstoffverbindungen mit zwei primären Aminen, wie beispielsweise m-Xylylendiamin und p-Xylylendiamin und Phenylendiamin, umfassen. Die polymeren Fettsäuren und/oder monomeren Fettsäuren und/oder dimeren Fettsäuren und/oder trimeren Fettsäuren und/oder Dicarbonsäuren können ausgewählt sein aus Tallölfettsäure, Linolensäure, Ölsäure, monomeren Fettsäuren mit 12 bis 22 Kohlenstoffatomen, Fettsäuren mit wenigstens 2 primären Aminogruppen, welche 2 bis 40 Kohlenstoffatome aufweisen, diaminoterminierten Dimerfettsäuren, Oxalsäure, Malonsäure, Bernsteinsäure, Glutarsäure, Adipinsäure, Pimelinsäure, Korksäure, Azelainsäure, Sebacinsäure, Undecandisäure, Decandicarbonsäure, Brassylsäure, Tetradecandisäure, Thapsiasäure, Octadecendicarbonsäure, Eicosandicarbonsäure, Docosandicarbonsäure Maleinsäure, 2,5-Furandicarbonsäure, Aminocarbonsäuren, 1,14-Tetradecandisäure, Terephthalsäure, Isophthalsäure und Fumarsäure. Die Polyetherdiamine können aus aliphatischen Diaminen mit 2 bis 40 Kohlenstoffatomen bestehen. Die langkettigen Aminocarbonsäuren können ausgewählt sein aus 11-Aminoundecansäure, 9-Aminononansäure, 10-Aminodecansäure, 12-Aminododecansäure, 11-Aminoundecansäure und N-Heptyl-11-Aminoundecansäure. Die Lactame können gesättigte, monocyclische Lactame mit 6 bis 16 Kohlenstoffatomen sein, wie beispielsweise Caprolactam, Capryllactam, Önanthlactam, Laurinlactam, Valerolactam und Caprolactam und Lauryllactam umfassen. Die primären linearen Alkylendiamine und/oder verzweigtkettigen Alkylendiamine und/oder heterocyclischen sekundären Diamine und/oder cycloaliphatischen Diamine mit 2 bis 10 Kohlenstoffatomen können beispielsweise Ethylendiamin, 1,3-Diaminopropan, 1,4-Diaminobutan, 2-Methyl-1,5-pentandiamin, Piperazin und Dipiperidylpropan und Hexamethylendiamin umfassen. Als Polyetherpolyole können Polyethylenglykol, Polypropylenglykol oder Polytetrahydrofuran, welche primäre Aminoendgruppen aufweisen, verwendet werden. Das Molekulargewicht der Polyetherpolyole mit Aminoendgruppen kann zwischen 700 g/mol und 3 500 g/mol oder auch zwischen 1 200 g/mol und 2 500 g/mol betragen. Beispiele für aminoterminierte Polyetherpolyole sind Bis-(3-aminopropyl)-polytetrahydrofuran mit einem Molekulargewicht zwischen 700 g/mol und 3 500 g/mol oder Bis-(2-aminopropyl)-polyoxypropylen mit einem Molekulargewicht zwischen 1 200 g/mol und 2 500 g/mol. Cycloaliphatische Diamine können ausgewählt sein aus Bis(3,5-dialkyl-4-aminocyclohexyl)methan, Bis(3,5-dialkyl-4-aminocyclohexyl)ethan, Bis(3,5-dialkyl-4-aminocyclohexyl)propan, Bis(3,5-dialkyl-4-aminocyclohexyl)butan, Bis(3-methyl-4-aminocyclohexyl)methan, p-Bis(aminocyclohexyl)methan und Isopropyliden-di(cyclohexylamin).

Konkrete Beispiele für Polyamide, Copolyamide, Polyamidharze, Polyetheramide, Polyesteramide, Polyamid-Schmelzklebstoffe sind: PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PATMDC10, PATMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/ MACMT/12, PA 6I/6T/MACMI/MACMT, PA 6I/6T/MACMI/ MACMT/12, PA MACM6/11, PA MACM6/12, PA MACM10/11, PAMACM10/12, PA MACM10/1010, PA MACM12/1012, PA MACM 12/1212, PA MACM14/1014, PA MACM 14/1214, PA MACM18/1018, PA 6I/6T/MACMI/MACMT/MACM12/612, PA 6I/6T/MACMI/ MACMT/MACM12, PA MACMI/MACMT/MACM12/12, PA MACMI/ MACMT/MACM12, PA 6I/6T/MACMI/MACMT/12, PA 6I/6T/6N/ MACMI/ MACMT/MACMN, PATMDC12/TMDCT/TMDC36, PA TMDC12/TMDCI, PA TMDC12/TMDCI/TMDC36, PA TMDC12/TMDCT, PA MACM10/PACM10, PA MACM12/PACM12, PA MACM14/PACM14, PA 6 [Polycaprolactam - ε-Caprolactam], PA 46, PA 49, PA 410, PA 411, PA 412, PA 413, PA 414, PA 415, PA 416, PA 418, PA 436, PA 56, PA 510, PA 512, PA 514, PA 66 [Poly(hexamethylenadipamid) Hexamethylendiamin + Adipinsäure], PA 69, PA 610 [Poly(hexamethylensebacamid) Hexamethylendiamin + Sebacinsäure], PA 611, PA 612 [Poly(hexamethylendodecanamid), Hexamethylendiamin + Dodecandisäure], PA 613, PA 614, PA 615, PA 616, PA 617, PA 618, PA 1010, PA 66/6, PA 6/66/610, PA 6/66/12, PA 6/12, PA 11 [Poly-11-aminoundecanamid (11-Aminoundecansäure)], PA 12 [Polylaurinlactam, (Poly-w-Laurinlactam)], PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12,PA PACM13, PA PACM14, PA PACM15, PA PACM16, PA PACM17, PA PACM18, PA PACM36, PA 4T/6T, PA 4T/8T, PA 6T/8T, PA 4T/MPMDT, PA 4T/4I, PA 5T/5I, PA 6T/6I, PA6T (Hexamethylendiamin HMD, Terephthalsäure), PA 9T, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, PA 6/3T.

Ferner kann als Kunststoff ein styrolbasiertes Polymer zum Einsatz kommen, z.B.: ein Polystyrol, ein Polystyrol-Copolymer, ein Methylmethacrylat-Acrylnitril-Butadien-StyrolCopolymer, ein Acrylester-Styrol-Acrylnitril-Copolymer, ein Styrol-Acrylnitril-Copolymer, eineStyrol-Methyl(meth)acrylat-Copolymer, ein Ethylen-Styrol-Interpolymer, ein Styrol-Maleinsäureanhydrid-Copolymer, ein Styrol-Maleimid-Copolymer, ein Styrol-N-Phenylmaleinimid-Copolymer, ein Styrol-Block-Copolymer, umfassend Styrol-Butadien-Styrol-Triblockcopolymere (SBS), Styrol-Isopren-Styrol-Triblockcopolymere (SIS), Styrol-(Isopren-Butadien)-Styrol-Triblockcopolymer (SIBS), Styrol-Isopren-Blockcopolymer (SI), Styrol-Isobuten-Styrol-Triblockcopolymere, Styrol-Ethylen-Butylen-Styrol-Copolymere (SEBS), Styrol-Ethylen-Butylen-Blockcopolymer (SEB), Styrol-(Ethylen-Propylen)-Blockcopolymere (SEP), Styrol-(Ethylen-Propylen)-Styrol-Triblockcopolymere (SEPS), Styrol-(Ethylen-Ethylen / Propylen)-Styrol-Triblockcopolymere (SEEPS), hydrierte und / oder teilweise hydrierte Styrol-Butadien-Kautschuke, hydrierte und / oder teilweise hydrierte Styrol-Isopren-Kautschuke, ein Acrylnitril-Butylacrylat-Methyl(meth)acrylat-Styrol-Copolymer.

Als Kunststoff kann ein Polyurethan zum Einsatz kommen. Als Polyurethan kann zum Einsatz kommen ein thermoplastische Polyurethane und/oder ein Polyurethan-Schmelzklebstoff. Thermoplastische Polyurethane und / oder Polyurethan-Schmelzklebstoffe werden z.B. gewonnen durch Umsetzung von aliphatischen und/oder cycloaliphatischen und/oder araliphatischen und/oder aromatischen Isocyanaten, wie beispielsweise Tri-, Tetra-, Penta-, Hexa-, Hepta- und/oder Oktamethylendiisocyanat, 2-Methyl-pentamethylen-1,5-diisocyanat, 2-Ethyl- butylen-1,4-diisocyanat, Pentamethylen-1,5-diisocyanat, Butylen-1,4-diisocyanat, 1-Isocyanato-3,3,5-trimethyl-5-isocyanatomethyl-cyclohexan, Isophorondiisocyanat (IPDI), 1,4-Bis(isocyanatomethyl)cyclohexan, 1,3-Bis(isocyanatomethyl)cyclohexan (HXDI), 2,4-p-Phenylendiisocynat (PPDI), 2,4-Tetramethylenxylendiisocyant (TMXDI), 4,4'-, 2,4'- und 2,2'-Dicyclohexylmethan-diisocyanat (H12 MDI), 1,6-Hexamethylen-diisocyanat (HDI), 1,4-Cyclohexan-diisocyanat, 1-Methyl-2,4- und/oder-2,6-cyclohexan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat, mit einer Verbindung, die gegenüber Isocyanat reaktive Gruppen besitzt, die ausgewählt ist aus Hydroxyl-, Mercapto-, Amino- und Carbonsäuregruppen. Diese Verbindungen sind beispielsweise Polyesteröle, Polyetheröle, Polycarbonatdiole, difunktionelle Polyole, Polyhydroxylverbindungen, Polycaprolactone, Polyetherpolyole, Ethylenoxid, Propylenoxid, Butylenoxid, Polypropylenglykol, Polytetrahydrofuran, Copolyester, die auf der Basis von Adipinsäure, Bernsteinsäure, Pentandisäure, Sebazinsäure und 1,2-Ethandiol oder 1,4-Butandiol, 1,6-Hexandiol, 3-Methyl-Pentan-1,5-diol, Polytetramethylenglykol und Polytetrahydrofura gewonnen werden. Diese Verbindungen können unter anderem auch Kettenverlängerer, wie beispielsweise 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol aufweisen.

Als Kunststoff können Polyolefine zum Einsatz kommen. Polyolefine werden vorzugsweise ausgewählt aus einem Polyolefinhomo- und / oder Polyolefincopolymer, vorzugsweise einem Polypropylen (PP) oder einem Polyethylen (PE) oder einem Polybutylen (PB), einem cyclischen Polyolefincopolymer (Cycloolefin-Copolymere COC, Cycloolefinpolymere COP, cyclische Blockcopolymere CBC), einem vernetzten Polyolefin, vorzugsweise einem vernetzten Polyethylen (PE-X), einem Poly-alpha-Olefin-Copolymer, einem Polyolefinelastomer, einem Ethylen-Vinylalkohol-Copolymer, einem Ethylen-Acrylsäure-Copolymer, beispielsweise einem Ethylen-Methacrylsäure-Copolymer EMAA, Polyolefin-Copolymere können Ethylen-α-Olefin-Copolymere, [α-Olefine (C3-C18): Propen, 1-Buten, 1-Penten, 1-Hexen, 1-Octen, 1-Decen 1-Dodecen], Propylen- α-Olefin-Copolymere, [α-Olefine (C2-C18): Ethylen, 1-Buten, 1-Penten, 1-Hexen, 1-Octen, 1-Decen 1-Dodecen], Ethylen-Propylen-Dien-Copolymere [α-Olefine (C3-C18): Propen, 1-Buten, 1-Penten, 1-Hexen, 1-Octen, 1-Decen 1-Dodecen], Ethylen-Propylen-Copolymere. Polyolefinhomo-Polymere umfassen Polyethylen geringer Dichte (linear low density polyethylene (LLDPE)), Polyethylen geringer Dichte (low density polyethylene (LDPE)) Polyethylen ultrageringer Dichte (ultra low density polyethylene (ULDPE)), lineares Polyethylen geringer Dichte, hergestellt mit Metallocen-Katalysatoren (metallocene linear low density polyethylene (mLLDPE)), Polyethylen sehr geringer Dichte (very low density polyethylene (VLDPE)), Polyethylen mit geringem Molekulargewicht (low molecular weight polyethylene (LMWPE)), Polyethylen mittlerer Dichte (middle density polyethylene (MDPE)), Polyethylen mit ultrahohem Molekulargewicht (ultra high molecular weight polyethylene (UHMWPE)), Polyethylen mit hohem Molekulargewicht (high molecular weight polyethylene), Polyethylen mit Langkettenverzweigung und chemisch modifiziertes Polyethylen, Polypropylen mit hoher Schmelzefestigkeit (high melt strength polypropylene (PP-HMS)), Polypropylen (PP), Polyolefinelastomere, Polybutadien, heterophasisches Propylen-Copolymer, Propylen-Homopolymer (isotaktisch, syndiotaktisch, ataktisch und Mischformen), schlagzähmodifiziertes Polypropylen, Polypropylen mit Nukleierungsmittel, chemisch modifiziertes Polypropylen, verzweigtes Polypropylen mit kurzen und oder langen Seitenketten (long- bzw. shortchain-branching), Polypropylen katalysiert mit Ziegler-Natta- und / oder Metallocen- und/oder Übergangsmetall- und / oder Seltenerdmetallkoordinationsverbindungen und / oder single-site-Übergangsmetall- und / oder Seltenerdmetallkoordinationsverbindungen, Propylen-Homopolymer und / oder Propylen-Ethylen-Copolymer, geeignet zur Herstellung von biaxial-orientierten BOPP-Folien, Polybutylenhomo- und / oder Polybutylencopolymere, cyclische Polyolefincopolymere (COC, COP).

Ferner kann für den Kunststoff zum Einsatz kommen Polyvinylbutyral, Polyimid und / oder Polyetherimid und / oder Polyamidimid und / oder einem thermoplastischen Polyimid, Polyether, Polyetheretherketon, Polyketon, Polyetherketon, Polyetherketonketon, Polyaryletherketon, Polyphenylensulfid, Polyxylen, Polyester (Copolyester, Polyester-Schmelzklebstoffe), Polycarbonat, Acetal, Polyacetal (POM), Acrylate, Polyacrylate, Acrylatharze und Acrylatcopolymere, die als Monomere Alkyl(meth)acrylate mit Alkyl- und/oder Hydroxyalkylgruppen, die 1 bis 15 Kohlenstoffatome besitzen. Beispiele hierfür sind Methyl(meth)acrylat, Butyl(meth)acrylat, 2-Ethylhexyl(meth)acrylat, Hydroxyethyl(meth)acrylat, Hydroxypropyl(meth)acrylat, Ethylen-Acrylsäure-Butylacrylat-Terpolymer und Acrylkautschuk. Weitere mögliche Polymere sind Acetat, Polyvinylacetat, Polyacetat, Polyacetat-Copolymer, Ethylen-Vinylakohol-Copolymer, Polysulfon, Polyphenylensulfon, Polyethersulfon, Polyether, insbesondere Polyphenylenoxid, flüssigkristallines Polymer, ein Hochleistungsthermoplast, Fluorpolymer, insbesondere Fluorhomopolymer, Fluorcopolymer, fluorhaltigen Polyurethan, fluorierten Ethylen-Propylen (FEP), Polyvinylidenfluorid (PVDF), Ethylen-Chlortrifluorethylen-Copolymer (ECTFE), Ethylen-Tetrafluorethylen-Copolymer (ETFE), Polytetrafluorethylen (PTFE), Polychlortrifluorethylen (PCTFE), Tetrafluorethylen-Hexafluorpropen-Vinylidenfluorid-Copolymer (THV), Tetrafluorethylen-Perfluoralkylvinylether-Copolymer (PFA), chemisch modifiziertes und / oder funktionalisiertes Fluorpolymer (Maleinsäureanhydrid, Aconitsäureanhydrid, Itaconsäureanhydrid oder Acrylsäure oder Silanverbindungen), Polylactone, Polyvinylbutyral, Polyvinylalkohol, Polyvinylacetat, Polyoxazolin (Poly(2-ethyl-2-oxazolin)), Bioabbaubare Polymere, Polymer aus nachwachsenden Rohstoffen und / oder einem Biopolymer, umfassend Cellulosepolymere, Polymilchsäure, Polyhydroxyalkanoat PHA, Polyglycerolsebacat PGS, Poly(ethylen-2,5-furandicarboxylat) PEF, Polyhydroxybutyrat PHB, Poly(butylensuccinat) PBS, Polysaccharid, Polygluconsäure PGA) lonomere.

Im Rahmen der Erfindung liegen selbstverständlich auch Mischungen aus den vorgenannten Materialien.

Zweckmäßigerweise wird ein pulverförmiger Werkstoff mit einer mittleren Partikelgröße von 1 bis 500 µm, vorzugsweise 10 bis 200 µm, insbesondere 20 bis 100 µm verwendet. Vorzugsweise sind die entsprechenden Partikel zumindest im Wesentlichen rund (d.h. annhähernd kreis- bzw. kugelförmig) ausgebildet.

Im Rahmen der Erfindung liegt es ferner, dass der Kunststoff zusätzlich ein Elastomer und/oder ein thermoplastisches Elastomer enthält. Hierdurch können die Schlagzähigkeitseigenschaften des damit hergestellten Bauteils verbessert werden. Beispielsweise wird als pulverförmiger Werkstoff ein Blend aus einem PA sowie einem TPE verwerdet. Bei dem thermoplastischen Elastomer kann es sich grundsätzlich um ein thermoplastisches Polyamidelastomer (TPE-A), ein thermoplastisches Elastomer auf Olefinbasis (TPE-O, bspw. PP/EPDM), ein thermoplastisches Vulkanisat bzw. vernetztes thermoplastisches Elastomer auf Olefinbasis (TPE-V, bspw. PP/EPDM), ein thermoplastisches Copolyesterelastomer (TPE-E), ein thermoplastisches Styrol-Blockcopolymere (TPE-S, z.B. SBS, SEBS, SEPS, SEEPS oder MBS) oder ein thermoplastisches Elastomer auf Urethanbasis (TPE-U) handeln. Grundsätzlich kann die Polymerkomponente und/oder das Elastomer und/oder das thermoplastische Elastomer in seiner/ihrer Ausgangsform vorliegen und / oder durch Pfropfung und / oder durch Copolymerisation und / oder Kondensations- und / oder Additionsreaktion und / oder durch radikalische Reaktion mit und / oder ohne Katalysator mit mindestens einer funktionellen Gruppe modifiziert sein. Die funktionelle Gruppe kann ausgewählt sein aus Hydroxy-, Amino-, Imino-, Imido-, Amido-, Carbonsäure-, Carbonsäureester-, Carbonsäureanhydrid-, Imid-, Amid-, Oxazolin-, Epoxy-, Glycidylgruppe, Mercaptan, Carbamat, Isocyanat, Cyanat, Amino-Amid-Verbindung, Alkohol, Silan, Silyl-, Alkoxysilylgruppe, Silazan, Siloxan, Methacrylat, Methyl(meth)acrylat, Acrylsäure, Methacrylsäure, Glycidylacrylsäure, Glycidylmethacrylsäure, Acrylsäureester, Methacrylsäureester, Maleinsäure, Maleinsäureanhydrid, Fumarsäure, Itaconsäure, Citraconsäure, Aconitsäure,Vinyl-Verbindung, Alkyl-aminoethyl-(meth)acrylsäure, Alkyl-aminopropyl-(meth)acrylsäure, Aminoalkyl-Verbindungen, Alkenylen, quartäre Ammonium-Gruppen, Sulfonsäure-, Phosphonsäure-, Vinylacetat-Gruppen und ionischen Gruppen, wie Carboxylat-, Sulfonat- und Phosphonatgruppe. Es liegt im Rahmen der Erfindung, wenn die funktionellen Gruppen mit Schutzgruppen, die bei höherer Temperatur unter Demaskierung der funktionellen Gruppen abgespalten werden können, modifiziert sind. Zweckmäßigerweise beträgt im hergestellten Bauteil der Gewichtsanteil des Elastomers und/oder des thermoplastischen Elastomers 10 bis 50 %, insbesondere 20 bis 40 %.

Alternativ oder ergänzend zum thermoplastischen Elastomer kann zum Einsatz kommen ein Elastomer, z.B. ausgewählt aus einem Kautschuk, vorzugsweise einem Acrylnitril-Elastomer (ACM), einem cis-1,4-Polybutadien, Chloropren, einem Neoprenkautschuk (CR), einem chlorsulfonierten Polyethylen (CSM), einem Ethylen-Propylen-Dien-Terpolymer (EPDM), einem amorphen Propylen-Ethylen-Dien-Terpolymer (PEDM), einem lonomer, einem Olefin-copolymer, einem Olefinterpolymer, einem Poly-alpha-Olefin-Copolymer, einem Poly-alpha-Olefin-Terpolymer, einem Polyolefinelastomer, einem Ethylen-Vinylalkohol-Copolymer, einem Ethylen-Propylen-Elastomer (EPM), einem Fluorelastomer (FKM), einem Ethylen-Acryl-Polymer (AEM), einem Acrylnitril-Butadien-Elastomer (NBR), einem hydrierten Acrylnitril-Butadien-Kautschuk (HNBR), einem Naturkautschuk (NR), einem chlorierten Polyethylen, (PE-C), einem Polyurethan (PU), einem Polyesterurethan (AU), einem Polyetherurethan (EU), einem Polyacrylatkautschuk (ACM), einem Butadienkautschuk (BR), einem Isoprenkautschuk (IR), einem Polyblend aus Nitrilkautschuk mit Polyvinylchlorid (NBR/PVC), einem Styrol-Butadien-Kautschuk (SBR), einem Styrol-Butadien-Kautschuk (SSBR), einem emulsionspolymerisierten Styrol-Butadien-Kautschuk (ESBR), einem Brombutylkautschuk (BIIR), einem Chlorbutylkautschuk (CIIR), einem Butadien-Kautschuk (BR), einem chlorsulfonierten Polyethylen (CSM), einem Epichlorhydrinkautschuk (ECO, CO, ETER), einem Ethylen-Vinylacetat-Kautschuk (EVA), einem Silikonkautschuk (MQ, VMQ, PVMQ, FVMQ), einem fluorierten Methylsilikonkautschuk (MFQ), einem perfluorierten Propylen-Kautschuk (FFPM) , einem Perfluorcarbon-Kautschuk (FFKM), einem Polynorbenkautschuk (PNR), einem trans-Polyoctenamer-Kautschuk (TOR), einem vernetzten Thermoplastischen Elastomeren auf Olefinbasis (TPV), einem Thermoplastischen Elastomeren auf Olefinbasis (TPO), einem Thermoplastischen Elastomeren auf Urethanbasis (TPU), einem Thermoplastischen Polyurethan-Silikonelastomeren, einem Thermoplastischen Polyesterelastomeren (TPE-E), einem Styrol-Blockcopolymeren (TPE-S bspw. SBS, SEBS, SEPS, SEEPS und MBS), einem Thermoplastischen Copolyamiden (TPE-A), einem vernetzten oder teilvernetzten Thermoplast oder einem solchen Elastomer, einem thermoplastischen Silikon-Block-Copolymer.

Dem, vorzugsweise polymeren, pulverförmigen Werkstoff kann ferner vor der Bauteilherstellung zusätzlich ein, vorzugsweise Cyanurate (bspw. Melamincyanurate) und/oder Polyphosphate (z.B. Melaminpolyphosphate) enthaltendes, Flammschutzmittel hinzugefügt werden, um die Brandschutzeigenschaften des Bauteils zu verbessern. Das Flammschutzmittel kann unter Einsatz eines Fließmittels in den pulverförmigen Werkstoff eingemischt werden. Der Gewichtsanteil des Fließmittels im fertig hergestellten Bauteil beträgt z.B. 0,1 bis 0,5 %. Zweckmäßigerweise beträgt im hergestellten Bauteil das Gewichtsverhältnis von Flammschutzmittel zu Micro-Hohlkugeln 20:1 bis 2:1, insbesondere 15:1 bis 4:1. Das Flammschutzmittel kann hierbei insbesondere einer durch die Micro-Hohlkugeln erhöhten Entflammbarkeit des Bauteils entgegenwirken, so dass die Bauteile mit geringer Dichte auch hohen Anforderungen an den Brandschutz genügen können.

Gegenstand der Erfindung ist auch ein erfindungsgemäß hergestelltes Bauteil, welches insbesondere im Luftfahrtbereich zum Einsatz kommen kann. Andere Anwendungszwecke sind hierdurch jedoch selbstverständlich nicht ausgeschlossen.

Im Folgenden wird die Erfindung anhand von Ausführungsbeispielen erläutert:

### Beispiel 1:

100 Gewichtsteile Polyamid-Pulver werden als Werkstoff mit 9,6 Gewichtsteilen Micro-Glashohlkugeln in einem Turbomischer vermischt und danach in einem SLS-Drucker verarbeitet. Das hergestellte Bauteil weist gegenüber einem entsprechenden Bauteil ohne Micro-Glashohlkugeln eine um ca. 7 % reduzierte Dichte auf. Das E-Modul steigt durch die Micro-Glashohlkugeln um ca. 5 %, während die Streckspannung um ca. 16 % reduziert wird.

### Beispiel 2:

75 Gewichtsteile Polyamid-Pulver werden mit 25 Gewichtsteilen eines thermoplastischen Elastomers compoundiert und zu einem pulverförmigen Werkstoff vermahlt. Dem pulverförmigen Werkstoff werden 20 Gewichtsteile des Flammschutzmittels Melaminpolyphosphat, 2 Gewichtsteile Micro-Glashohlkugeln und 0,3 Gewichtsteile eines Fliessmittels mithilfe eines Mischers trocken untergemsicht. Das aus diesem Werkstoff im SLS-Verfahren hergestellte Bauteil ist flammschutzbeständig (festgestellt mittels 12s Vertical Burn Test), weist eine Gewichtreduktion von 2% gegenüber einem Bauteil ohne Micro-Glashohlkugeln und in etwa die gleiche Bruchdehnung auf wie Bauteile aus einem Material bestehend aus 100 Gewichtsteilen Polyamidpulver und 0,3 Gewichtsteilen Fiessmittel.

### Beispiel 3:

55 Gewichtsteile Polyamid-Pulver werden mit 45 Gewichtsteilen eines thermoplastischen Elastomers und 20 Gewichtsteile des Flammschutzmittels Melaminpolyphosphat compoundiert und vermahlt. Dem so erhaltenen Gemisch werden 2 Gewichtsteile Mikro-Glashohlkugeln und 0,3 Gewichtsteils eines Fliessmittels mithilfe eines Mischers trocken untergemsischt und das Material wird in einem SLS-Prozess verarbeitet.

### Beispiel 4:

55 Gewichtsteile Polyamid-Pulver werden mit 45 Gewichtsteilen eines thermoplastischen Elastomers und 10 Gewichtsteilen des Flammschutzmittels Melamincyanurat compoundiert und vermahlt. Dem so erhaltenen Gemisch werden 2 Gewichtsteile Mikro-Glashohlkugeln und 0,3 Gewichtsteile eines Fliessmittels mithilfe eines Mischers trocken untergemischt und das Material wird in einem SLS-Prozess verarbeitet.

### Beispiel 5:

55 Gewichtsteile Polyamid-Pulver werden mit 45 Gewichtsteilen eines thermoplastischen Elastomers, 20 Gewichtsteilen des Flammschutzmittels Melaminpolyphosphat und 2 Gewichtsteilen Micro-Glashohlkugeln compoundiert und vermahlt. Dem so erhaltenen Gemisch werden 0,3 Gewichtsteile eines Fliessmittels mithilfe eines Mischers trocken untergemsischt und das Material wird danach in SLS-Verfahren verarbeitet.

### Beispiel 6:

55 Gewichtsteile Polyamid-Pulver werden mit 45 Gewichtsteilen eines thermoplastischen Elastomers, 10 Gewichtsteilne des Flammschutzmittels Melamincyuanurat und 2 Gewichtsteilen Micro-Glashohlkugeln compoundiert und vermahlt. Dem so erhaltenen Gemisch werden 0,3 Gewichtsteilen eines Fliessmittels mithilfe eines Mischers trocken untergemsischt und das Material wird in einem SLS-Prozess verarbeitet.

## Patentansprüche

1. Verfahren zur Herstellung eines Bauteils im Wege der additiven Fertigung, insbesondere durch selektives Lasersintern, wobei als Grundmaterial ein pulverförmiger Werkstoff eingesetzt wird, wobei dem pulverförmigen Werkstoff vor der Bauteilherstellung Micro-Hohlkugeln, insbesondere Micro-Glashohlkugeln, mit einer geschlossenen Oberfläche zugesetzt werden, **dadurch gekennzeichnet, dass** die Micro-Hohlkugeln einen mittleren Durchmesser von 15 bis 25 µm und eine Wandstärke von 1 bis 3 µm aufweisen.

2. Verfahren nach Anspruch 1, **dadurch gekennzeichnet, dass** im hergestellten Bauteil das Gewichtsverhältnis von Micro-Glashohlkugeln zu pulverförmigem Werkstoff 0,5 bis 25 %, z.B. 1 bis 10 %, vorzugsweise 1,5 bis 5 %, beträgt.

3. Verfahren nach Anspruch 1 oder 2, **dadurch gekennzeichnet, dass** die Micro-Hohlkugeln oder Micro-Glashohlkugeln eine, vorzugsweise siliziumhaltige, Oberflächenbeschichtung aufweisen.

4. Verfahren nach einem der Ansprüche 1 bis 3, **dadurch gekennzeichnet, dass** ein pulverförmiger Werkstoff aus Kunststoff, insbesondere enthaltend ein Polyamid und/oder ein Polyolefin und/oder ein Polyester und/oder ein thermoplastisches Polyurethan und/oder ein Styrolcopolymer und/oder ein Polyetherimid und/oder ein Polyetheramid und/oder ein Polyetherketon und/oder ein Polyetheretherketon verwendet wird.

5. Verfahren nach Anspruch 4, **dadurch gekennzeichnet, dass** der Kunststoff zusätzlich ein Elastomer und/oder ein thermoplastisches Elastomer enthält.

6. Verfahren nach Anspruch 5, **dadurch gekennzeichnet, dass** als thermoplastisches Elastomer ein TPE-A, TPE-O, TPE-V, TPE-E, TPE-S oder TPE-U verwendet wird.

7. Verfahren nach einem der Ansprüche 1 bis 6, **dadurch gekennzeichnet, dass** dem pulverförmigen Werkstoff vor der Bauteilherstellung zusätzlich ein, vorzugsweise Cyanurate und/oder Polyphosphate enthaltendes, Flammschutzmittel zugesetzt wird.

8. Bauteil hergestellt mit einem Verfahren nach einem der Ansprüche 1 bis 7.

## Claims

1. Method for producing a component by way of additive manufacturing, in particular by selective laser sintering, wherein a powder material is used as the base material, wherein hollow microspheres, in particular glass hollow microspheres, having a closed surface are added to the powder material before the component is produced, **characterised in that** the hollow microspheres have an average diameter of 15 to 25 µm and a wall thickness of 1 to 3 µm.

2. Method according to claim 1, **characterised in that** the weight ratio of the glass hollow microspheres to the powder material ranges from 0.5 to 25%, for example from 1 to 10%, preferably from 1.5 to 5% in the produced component.

3. Method according to claim 1 or 2, **characterised in that** the hollow microspheres or glass hollow microspheres have a surface coating preferably containing silicon.

4. Method according to any one of claims 1 to 3, **characterised in that** a powder material made of plastic is used, in particular containing a polyamide and/or a polyolefin and/or a polyester and/or a thermoplastic polyurethane and/or a styrene copolymer and/or a polyetherimide and/or a polyetheramide and/or a polyetherketone and/or a polyetheretherketone.

5. Method according to claim 4, **characterised in that** the plastic additionally contains an elastomer and/or a thermoplastic elastomer.

6. Method according to claim 5, **characterised in that** a TPE-A, TPE-O, TPE-V, TPE-E, TPE-S or TPE-U is used as the thermoplastic elastomer.

7. Method according to any one of claims 1 to 6, **characterised in that** a flame retardant, preferably containing cyanurates and/or polyphosphates, is further added to the powder material before the component is produced.

8. Component produced by a method according to any one of claims 1 to 7.

## Revendications

1. Procédé de fabrication d'un composant dans la cadre de la fabrication additive, en particulier par frittage laser sélectif, dans lequel est employé en tant que matériau de base un matériau pulvérulent, dans lequel des microbilles creuses, en particulier des microbilles creuses en verre, avec une surface fermée sont ajoutées au matériau pulvérulent avant la fabrication du composant, **caractérisé en ce que**
les microbilles creuses présentent un diamètre moyen de 15 à 25 µm et une épaisseur de paroi de 1 à 3 µm.

2. Procédé selon la revendication 1, **caractérisé en ce que** le rapport de poids des microbilles creuses en verre par rapport au matériau pulvérulent va de 0,5 à 25 %, par exemple de 1 à 10 %, de préférence de 1,5 à 5 % dans le composant fabriqué.

3. Procédé selon la revendication 1 ou 2, **caractérisé en ce que** les microbilles creuses ou les microbilles creuses en verre présentent un revêtement de surface contenant de préférence du silicium.

4. Procédé selon l'une quelconque des revendications 1 à 3, **caractérisé en ce qu'**est utilisé un matériau pulvérulent en matière synthétique, en particulier contenant un polyamide et/ou une polyoléfine et/ou un polyester et/ou un polyuréthane thermoplastique et/ou un copolymère de styrène et/ou un polyétherimide et/ou un polyétheramide et/ou un polyéthercétone et/ou un polyétheréthercétone.

5. Procédé selon la revendication 4, **caractérisé en ce que** la matière synthétique contient en supplément un élastomère et/ou un élastomère thermoplastique.

6. Procédé selon la revendication 5, **caractérisé en ce qu'**est utilisé en tant qu'élastomère thermoplastique un TPE-A, TPE-O, TPE-V, TPE-E, TPE-S ou TPE-U.

7. Procédé selon l'une quelconque des revendications 1 à 6, **caractérisé en ce qu'**est ajouté au matériau pulvérulent en supplément un agent retardateur de flammes, contenant de préférence des cyanurates et/ou des polyphosphates, avant la fabrication du composant.

8. Composant fabriqué avec un procédé selon l'une quelconque des revendications 1 à 7.
